# EUROPEAN PATENT SPECIFICATION

(11) **EP 2 796 296 B1**
(45) Date of publication and mention of the grant of the patent: **07.10.2020**
(21) Application number: 12860615.9
(22) Date of filing: 19.10.2012
(51) Int. Cl.: G06F 3/12, B41J 29/393, G06K 15/02, G06K 15/00

(54) **IMAGE FORMATION SYSTEM AND DEVICE, CONTROL METHOD THEREOF, AND TROUBLESHOOTING METHOD**
BILDERZEUGUNGSSYSTEM UND VORRICHTUNG, STEUERVERFAHREN DAFÜR UND FEHLERBEHEBUNGSVERFAHREN
SYSTÈME ET DISPOSITIF DE FORMATION D'IMAGE, LEUR PROCÉDÉ DE COMMANDE ET PROCÉDÉ DE DÉPANNAGE

(30) Priority: 23.12.2011 CN 201110440355
(43) Date of publication of application: 29.10.2014
(73) Proprietor: Zhuhai Pantum Electronics Co., Ltd., Zhuhai, Guangdong 519060 (CN)
(72) Inventor: YIN, Aiguo, Zhuhai Guangdong 519060 (CN); DONG, Jinliang, Zhuhai Guangdong 519060 (CN)
(74) Representative: Haseltine Lake Kempner LLP
(86) International application number: PCT/CN2012/083196
(87) International publication number: WO 2013/091436

(56) References cited:
- EP-A2- 1 199 677
- EP-A2- 2 371 562
- CN-A- 1 350 226
- CN-A- 102 211 473
- CN-A- 102 555 554
- JP-A- 2002 337 417
- US-A- 5 872 900
- US-A1- 2006 239 736

## Description

### TECHNICAL

### FIELD OF THE INVENTION

The present invention relates to an image forming system and apparatus and methods for controlling and troubleshooting, and particularly to an image forming system and apparatus capable of performing printing operations on both sides of the recording medium and communicating, and methods for controlling and troubleshooting.

### BACKGROUND OF THE INVENTION

In recent years, image forming apparatuses are used as an output device of computers to achieve functions, such as printout, by communicating with computers. Many image forming apparatuses (e.g., a printer) are provided with a function of duplex printing capable of performing printing operations on both sides of the paper automatically, which saves both energy and paper.

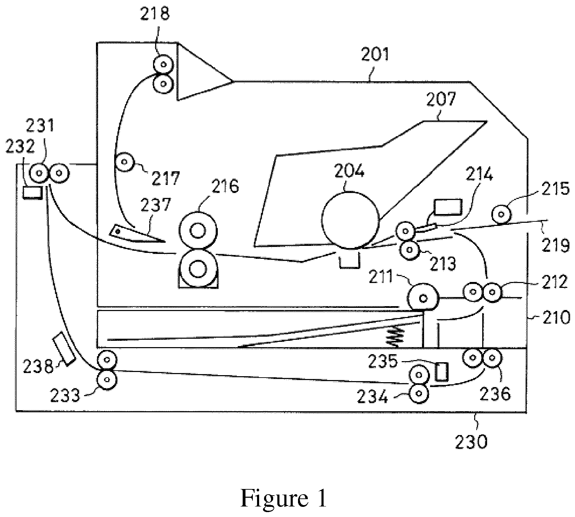

Typically, the duplex printing can be realized by the same image forming apparatus. After one side of the paper is printed, a reversing mechanism is required to turn over the paper and make the other side of the paper printed. Figure 1 shows a structure diagram of a printer capable of duplex printing. A paper tray 210 is used to carry and store the paper. A pickup roller 211 is used for separating the uppermost one sheet of paper in the tray, and a paper-feed roller 212 transfers the paper sheet to a resist shutter 214. The pickup roller 211 is rotated in an intermittent manner, with one sheet of paper being fed in response to once rotation. The resist shutter 214 stops paper-feed operation by pressing onto the sheets of paper so as to adjust the front-edge alignment of the sheets of paper. Further, the paper sheets from a manual feed tray 219 are transferred to the resist shutter 214 via a manual paper-feed roller 215. A sheet of paper passing the resist shutter 214 is transferred to a transfer unit 204 by a paper-feed roller 213. After going through a series of image processing and digital-to-analogue conversion, an image signal to be printed, coming from the host, is embodied with a toner image on the front side of the sheet of paper via a transfer unit 204, and then the sheet of paper with the toner image passes through an image-fixing roller 216 so that the toner image is fixed on the paper. Depending on switch of a reverse flapper 237, the sheet of paper discharged from the image-fixing roller 216 either enters a duplex printing unit 230 or, through a conveying roller 217 and a discharging roller 218, is discharged from the printer body and delivered to a discharge tray 201 on the top of the printer body. After transferred to the duplex printing unit 230 by the reverse flapper 237, the sheet of paper is further transferred upward by an reverse roller 231; when the rear-edge of the paper is detected by an reverse sensor 232, the reverse roller 231 starts reversal rotation to transfer the paper downward. When the front-edge of the reversed paper is detected by a pause sensor 238, the sheet of paper is in a pause position, and at this moment, a paper re-feed sensor 235 detects whether there is a previous paper sheet in the duplex printing unit 230. If so, then the reverse roller 231 stops rotating until it is confirmed that the previous paper no longer exists. If the paper re-feed sensor 235 detects no any paper therein, then the reverse roller 231 continues to rotate to transfer the sheet of paper until the paper re-feed sensor 235 detects the front-edge of the paper sheet. Thereafter, when a feed instruction and a duplex secondary feed instruction are received from the printer controller, the sheet of paper is re-fed via the conveying roller 236 and the paper-feed roller 212. Based on the above structure, the sheet of paper may be re-fed from the duplex printing unit 230, and it is discharged onto the discharge tray 201 via the discharge roller 218 after a toner image is formed on the back side of the sheet of paper.

The data sent to the printer from the host is arranged in a sequential or reverse order. When a multi-page document is to be duplex printed, the sheets of paper discharged onto the paper tray are not arranged in a correct page order. For example, when a 4-page document is to be printed and the data sent by the host to the printer is in the sequential order, the page order of the discharged paper, from the bottom to the top, is 2-1-4-3. Therefore, manual sorting is indispensable before binding of the paper, increasing the complexity of operations.

One of the existing methods to solve this problem is that the master equipment connecting with the image forming apparatus firstly stores the page data of a multi-page document in its buffer cache, and its controller re-adjusts the order of the page data according to the duplex printing configuration, and then the master equipment directly sends the reordered page data to the image forming apparatus for printing operations, so that the printed document is arranged in the correct page order and can be directly bound without reordering. In this manner, a buffer cache needs to be allocated in the memory of the master equipment to store all the page data, occupying the memory resources. Further, when a malfunction, such as paper jam, occurs during the printing process of a multi-page document, it may be necessary for the master equipment to re-send the page data to the image forming apparatus and then the image forming apparatus starts to print once again from the beginning, causing both paper wastage of the prior print and increased waiting time for a user.

Another of the existing implementation is to establish a page order control protocol between the master equipment and the image forming apparatus for transmitting a page print order related information; by means of the page order control protocol, the master equipment sends the page print order related information to the image forming apparatus, and the image forming apparatus controls print order of the page data according to such page printing order related information. This implementation requires establishment of a normalized page order control protocol between the master equipment and the image forming apparatus. As the page order control protocol involves process flows at both the master equipment side and the image forming apparatus side, the complexity of the system is thereby increased. In addition, when capacity for the page data storage of the image forming apparatus is insufficient for storage of the print data of all the pages, the image forming apparatus may be informed of which page to be printed according to the page order control protocol but fails to receive the page data, thus the printing operation can not be achieved.

EP2371562 discloses a print control apparatus and method. In printing data of a plurality of pages on a continuous sheet, it is determined whether the data is to be printed on a single side of the continuous sheet or on both sides thereof. A first sequence of pages arranged on a first side of the continuous sheet occurring when it is determined that the data is to be printed on the single side and a second sequence of pages arranged on the first side of the continuous sheet occurring when it is determined that the data is to be printed on the both sides such that the first and second sequences are opposite to each other. Each of the first and second sequences indicates whether the pages are arranged in descending order or in ascending order.

EP 1199677A2 discloses a printing system comprises a printing apparatus for performing printing and a jam recovery user interface section connected to the printing apparatus to perform given directions, wherein the printing apparatus comprises a data analysis section that expands print data to bit mapped images, an expanded bit image data store section that stores data based on identification information for each page, and an expanded bitmap data printing section that prints bit mapped images on media, and the jam recovery user interface section comprises a page bit image display section that displays bitmapped images output from the printing apparatus and a recovery target page specifying section that receives a direction from a user and outputs identification information corresponding to a specified page to the printing apparatus.

### SUMMARY

One technical problem to be solved by the present invention is to provide an image forming system, image forming apparatus and control method capable of better controlling the page printing order.

The invention is defined in the attached independent claims to which reference should now be made. Further, optional features may be found in the sub-claims appended thereto.

To solve the above problem, the present invention provides an image forming apparatus. According to an aspect of the present invention, the image forming apparatus comprises:
a communication interface unit for communicating with external equipments;
a storage unit for storing page data information, wherein said page data information includes page data for image-forming processing, and wherein said page data information may include page index information;
a page order determining unit for determining the order of the image-forming processing of said page data that is referred to as image paging order;
an image-forming unit for performing the image-forming processing; and
an image sending unit for sending said page data stored in said storage unit to said image-forming unit according to the image paging order determined by said page order determining unit,
wherein, said image-forming unit is arranged to perform the image-forming processing based on the received page data; and
wherein the page order determining unit is arranged to determine whether a duplex printing instruction is received by said image forming apparatus before said page order determining unit determines the image paging order for the image-forming processing of said page data, characterized in that:
   if it is judged that no duplex printing instruction is received, said image paging order is determined based on the received order of said page data and the orientation of the sheets used as the image-forming media; and
   if it is judged that a duplex printing instruction is received, said page order determining unit determines said image paging order based on at least one of the received order of said page data and said page index information contained in said page data information;
   and in that:
      whenever an abnormal image-forming interruption that occurs during duplex printing is eliminated, said image sending unit, under the control of a CPU, re-sends to the image-forming unit the page data of two pages corresponding to a sheet that is receiving the image-forming processing when the image-forming interruption occurs, so as to re-print page data corresponding to the sheet, and then sends the page data of follow-up pages to said image-forming unit according to the image paging order determined by said page order determining unit; or
      when an abnormal image-forming interruption occurs, said page order determining unit re-determines the image paging order of the page data of the two pages corresponding to the sheet that is receiving the image-forming processing when the image-forming interruption occurs together with the image paging order of the follow-up page data, and said image sending unit sends the corresponding page data to said image-forming unit according to the image paging order re-determined by said page order determining unit.

The image sending unit or the page order determining unit, according to said image paging order and storage address of the page data in said storage unit, may be arranged to determine the addressing order for said image sending unit accessing to said storage unit to send the page data to said image-forming unit.

If it is judged that a duplex printing instruction is received, said page order determining unit may determine said image paging order based on: at least one of said received order and said page index information in combination with at least one of print control information and information related to the processing capacity of said image-forming unit while said image-forming unit performing a single image-forming output.

Said communication interface unit may be arranged to receive the page data information from external equipments communicating with the image forming apparatus and may be arranged to store it in said storage unit. Additionally or alternatively, the image forming apparatus may further include an image acquisition unit by which image information is acquired as the page data.

The storage unit may be arranged to initially store part of the page data for the image-forming processing, and the page order determining unit may be arranged to determine the image paging order of this part of page data, and then, after the image-forming processing on one unit of data or pre-set units of data is completed, the pages data with size corresponding to the available storage capacity may be stored and the image paging order thereof may be determined. The one unit of data may refer to the page data processed by said image forming apparatus while said image forming apparatus is performing a single image-forming process.

The image forming apparatus may be arranged such that if it is judged that a duplex printing instruction is received, when an abnormal image-forming interruption occurs:
said image sending unit re-sends to the image-forming unit the page data of two pages corresponding to a sheet that is receiving the image-forming processing when the image-forming interruption occurs, and then sends the page data of follow-up pages to said image-forming unit according to the image paging order determined by said page order determining unit; or,
said page order determining unit re-determines the image paging order of the page data of the two pages corresponding to the sheet that is receiving the image-forming processing when the image-forming interruption occurs together with the image paging order of the follow-up page data, and said image sending unit sends the corresponding page data to said image-forming unit according to the image paging order re-determined by said page order determining unit.

According to another aspect of the present invention, there is provided an image forming system, comprising an image forming apparatus according to any one of the preceding statements and an electronic equipment communicating with said image forming apparatus. According to this aspect, the communication interface unit is arranged to receive page data information from said electronic equipment and is arranged to store the received page data information in said storage unit of said image forming apparatus, and said page data information includes page data for the image-forming processing.

According to another aspect of the present invention, there is provided a control method for an image forming apparatus for printing on individual sheets, the method comprises:
receiving page data information;
storing said page data information in a storage unit of said image forming apparatus, wherein said page data information includes page data for image-forming processing, and wherein said page data information may include page index information;
determining the order of the image-forming processing of said page data which is referred to as image paging order;
an image sending unit sending the page data stored in said storage unit to an image-forming unit of said image forming apparatus according to the determined image paging order; and
performing, by the image-forming unit of said image forming apparatus, the image-forming processing based on said received page data;
judging, before determination of the image paging order for the image-forming processing of said page data, whether a duplex printing instruction is received by said image forming apparatus; characterised in that:
   if it is judged that no duplex printing instruction is received, determining the image paging order based on the received image paging order of said page data and the orientation of the sheets used as the image-forming media;
   if it is judged that a duplex printing instruction is received, determining the image paging order based on at least one of the received order of said page data and said page index information contained in said page data information;
   and in that:
      whenever an abnormal image-forming interruption that occurs during duplex printing is eliminated, the image sending unit, under the control of a CPU, re-sending to the image-forming unit the page data of two pages corresponding to a sheet that is receiving the image-forming processing when the image-forming interruption occurs, so as to re-print page data corresponding to the sheet, and then sending the page data of follow-up pages to said image-forming unit according to the image paging order determined; or
      when an abnormal image-forming interruption occurs, re-determining the image paging order of the page data of the two pages corresponding to the sheet that is receiving the image-forming processing when the image-forming interruption occurs together with the image paging order of the follow-up page data, and sending the corresponding page data to said image-forming unit according to the image paging order re-determined.

The method may further comprise determining, according to said image paging order and the storage address of page data in said storage unit, addressing order for sending the page data to said image-forming unit.

The method may further comprise, if it is judged that a duplex printing instruction is received, determining the image paging order based on: at least one of said received order and said page index information in combination with at least one of print control information and information related to the processing capacity of said image-forming unit while said image-forming unit performing a single image-forming output.

The method may further comprise storing, initially, part of the page data for image-forming processing in said storage unit, and determining the image paging order of this part of page data by said page order determining unit, and then, after the image-forming processing on one unit of data or pre-set units of data is completed, storing the pages data with size corresponding to the available storage capacity and determining the image paging order. Said one unit of data may refer to the page data processed by said image forming apparatus while said image forming apparatus performing a single image-forming process.

In the present invention, by storing the page data information of the document to be printed in the data storage unit of the image forming apparatus and determining the image paging order, by means of the page order determining unit of the printing device, based on the page data received order in the page data information, the page index information in the page data information, the print control information and/or the print engine capacity information and the like, the page data sent to the image-forming unit (e.g. the print engine unit of a printer) are arranged in the order expected by the user, thus saving the memory resources of the host connected with the image forming apparatus and reducing the purchase cost of the host. In addition, compared to the establishment of a page order control protocol between the host and the image forming apparatus for transmitting information related to page printing order, the present invention reduces the complexity of implementation of the system.

In addition, the present invention also provides a troubleshooting method and apparatus which starts printing merely from the page data on the jammed sheet of paper without printing any document information which has been printed previously, by means of which the above-described problems of paper wastage and increased waiting time is solved, thus achieving a more energy saving and environmentally friendly printing process.

Other features and advantages of the invention will be set forth in the description which follows, and in part will be obvious from the description, or may be learned by practice of the invention. The objectives and other advantages of the invention may be realized and attained by the structure particularly pointed out in the description and claims hereof as well as the accompanying drawings.

### BRIEF DESCRIPTION OF THE DRAWINGS

The accompanying drawings provide a further understanding of the invention, and constitute a part of this specification to interpret the present invention together with the embodiments of the invention, rather than limiting the present invention.
Figure 1 is a structure diagram of a printer capable of duplex printing of the prior art.
Figure 2 is a schematic diagram of structure modules of an image forming system of an embodiment of the present invention.
Figure 3 is a flowchart of troubleshooting in case of malfunction during one-sheet paper feed pattern in one embodiment of the present invention.
Figure 4 is a flowchart of troubleshooting in case of malfunction during two-sheet paper feed pattern in one embodiment of the present invention.
Figure 5 is a flowchart of troubleshooting in case of malfunction during two-sheet paper feed pattern in another embodiment of the present invention.

### DETAILED DESCRIPTION

In order to make the objectives, technical solutions and advantages of the present invention more apparent, the present invention will be described in further detail below in conjunction with the accompanying drawings and embodiments.

### Embodiment 1

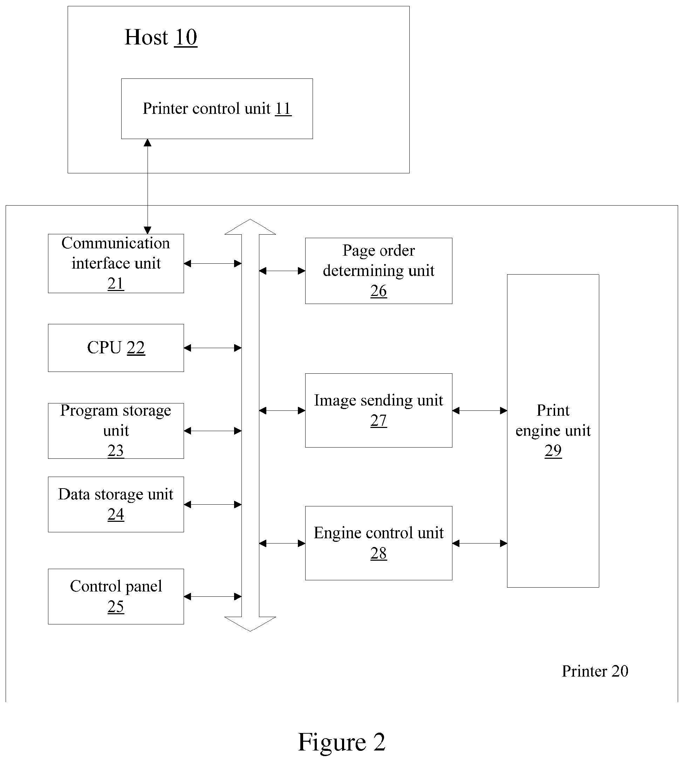

Figure 2 shows a structure schematic view of the image forming system of Embodiment 1 of the present invention.

The above-described image forming system comprises an electronic equipment (referred to as host herein) sending page data information and print control related information, such as computers, camcorders, cameras, etc., and a printer re-organizing and controlling print operations according to image paging order. The host and the printer communicate with each other through predetermined communication channels, such as USB, power lines, wireless or wired networks, etc. In the case, the page data information includes page data for image-forming processing to be performed and, alternatively, may also include the related paging information of page data for the image-forming processing to be performed, such as sequence index and total number of pages.

It should be noted that, although the description is exemplified with a printer, the image forming apparatus of the present invention is not limited to the printer, instead, it also may be, such as a fax machine, an intellectual all-in-one machines that is capable of at least one of the functions of printing, copying, scanning, etc. Furthermore, paper sheets are taken as an example for illustration of paper discharging order in the present invention. However, any sheets of other printing materials used as image-forming media may be also applied.

As shown in Figure 2, on the side of the host, a printer control unit is provided for controlling data transmission and reception of the printer and, under the control of CPU (not shown) of the host 10, for sending the page data information and (in a preferable case) the print control related information to the printer.

The printer 20 is provided with a communication interface unit 21. The communication interface unit 21 is used for communicating with external equipments. In particularly, the communication interface unit 21 is used to, under the control of the CPU at the side of printer, communicate with the printer control unit at the side of the host to receive the page data and the print control information. In the case, the page data refers to the page data to be printed, and the print control information includes, for example, single-side print instruction or duplex printing instruction, requirement of paper discharge direction, and paper feed patterns, etc.

The printer 20 may also include a program storage unit 23. The program storage unit 23 stores print engine capacity information, i.e., the number of fed paper sheets accommodated in a print engine during printing.

The printer 20 may be also provided with CPU 22. CPU 22 controls the print processing (including duplex printing), respective units connected to CPU 22 based on various control programs stored in the program storage unit 23, and communication processing with the host. Furthermore, control functions of CPU 22 can also be allocated to respective units with which every control functions can be executed respectively.

The printer 20 may also include a data storage unit 24. The data storage unit 24 is used for storing data information, e.g., the page data information received by the communication interface unit 21 from the printer. It should be noted that the program storage unit 23 and the data storage unit 24 can be realized as a single storage unit, which is used for storing the data information of the printer.

In the present invention, above-described program storage unit 23 and data storage unit 24 are collectively referred to as storage unit.

The printer 20 may also include a control panel 25 which controls a panel composed of buttons for setting the desired print mode and a display unit for displaying the print status.

The printer 20 also includes a page order determining unit 26. The page order determining unit 26 determines an image paging order that meets the user's requirements according to the page data information delivered via the bus from the communication interface unit 21, or according to the page data information and the print control information from the communication interface unit 21. Further, the page order determining unit 26 or a image sending unit 27 (to be described below), according to the determined image paging order and the storage address of page data in the data storage unit 24, can determine the addressing order for accessing to the data storage unit 24 of the image forming apparatus 20 to send the page data to a print engine unit 29.

Further, preferably, the page order determining unit 26 determines the image paging order based on the information, stored in the program storage unit 23, related to the processing capacity of an image-forming unit while performing once image-forming output. For the printer 20, such information related to the processing capacity of the image-forming unit's once image-forming output includes the print engine capacity information, such as the number of paper sheets which the print engine unit can printout at once paper feed processing (usually referred to as paper feed quantity), the maximum paper feed quantity, and whether a lower paper feed quantity is supported. In this way, when the print engine capacity is insufficient to store all the page data to be printed at one time, it may be well controlled for the process of the image paging order and the process of sending the page data to the image forming apparatus 20 by the host 10 (to be detailed below).

The printer 20 may also include an image sending unit 27. Under the control of CPU 22, the image sending unit 27 sends the page data stored in the data storage unit 24 to the print engine unit 29 serving as the image-forming unit according to the image paging order determined by the page order determining unit 26. More specifically, according to the addressing order of the data storage unit 24 determined by the image sending unit 27 or the page order determining unit 26 based on the image paging order, the image sending unit 27 sends the page data stored in the data storage unit 24 to the print engine unit 29 to perform the print operations.

The printer 20 may also include an engine control unit 28. Under the control of CPU 22, the engine control unit 28 performs the image-forming processing, e.g., paper transport, print control, etc.

The printer 20 also includes the print engine unit 29 as its the image-forming unit, which includes a reversing means for reversing the paper so that the image data can be actually printed on both sides of the paper. Further, the print engine unit 29, under the control of the engine control unit 28, also performs the image-forming processing, such as printout and the like, on the page data from the image sending unit according to the sending order of the image sending unit.

In this embodiment, the processing flow is as follows.

Firstly, the host 10 sends the page data information of the document to be printed and the (optional) print control information to the printer 20, and will store the page data information in the data storage unit 24 under the control of CPU 22 of the printer. The print control information includes required paper discharge orders, paper feed patterns, etc.

Next, the page order determining unit 26 of the printer 20 may also determine whether the printer 20 has received a duplex printing instruction. If it is judged that no duplex printing instruction has been received, then said image paging order is determined based on the received order of the page data and the orientations of the sheets serving as the image-forming media. For example, when it is judged that no such instruction has been received, since the received order is from small to large in term of page index and the sheets serving as the image-forming media are determined, based on the print control information, to be discharged with facing upward, then a reverse order against the page data received order can be determined as said image paging order. Again, when it is judged that no such instruction has been received, since the received order is from small to large in term of page index and the sheets serving as the image-forming media are determined, based on the print control information, to be discharged with facing downward, the received (time) order of the page data in the data storage unit 24 can be directly determined as the image paging order. For example, when it is judged that no such instruction has been received, since the received order is from large to small in term of page index and the sheets serving as the image-forming media are determined, based on the print control information, to be discharged with facing upward, the page data received order can be directly determined as said image paging order. Again, when it is judged that no such instruction has been received, since the received order is from large to small in term of page index and the sheets serving as the image-forming media are determined, based on the print control information, to be discharged with facing downward, a reverse order against the received (time) order of the page data in the data storage unit 24 can be determined as the image paging order. It should be noted that, since the received order of the page data may vary, e.g., with only data of odd pages being sent, data of odd pages being sent prior to data of even pages, or data of specified pages of the document being sent, etc., there are varieties of patterns to determine the image paging order based on the received order of the page data.

By the way, being "discharged with facing upward" means that the discharged paper sheets, from the top to the bottom in the discharge tray, are arranged from small to large in term of page index, while being "discharged with facing downward" means that the discharged paper sheets, from the bottom to the top in the discharge tray, are arranged from small to large in term of page index.

Further, when it is judged that no such instruction has been received, said image paging order can also be determined based on the page index information in the page data information.

Conversely, if it is judged that a duplex printing instruction has been received, then said image paging order is determined based on the following information: at least one of the received order of the page data and the page index information contained in said page data information; alternatively, at least one of the above two in combination with at least one of the information related to the processing capacity of the image-forming unit's (it is the print engine unit 29 in this embodiment) once image-forming output and the print control information. For example, the page order determining unit 26 determines the image paging order for formation (printing) of images and determines the addressing order for the image sending unit 27 accessing to the data storage unit 24 by mean of which to send the page data to the print engine unit 29, based on the received order of the page data stored in the data storage unit 24, the print control information and the print engine capacity information stored in the program storage unit (e.g., how many sheets of paper that the print engine unit 29 can process when performing once image-forming output). It is important that, when the page index information is included in the page data information, page order determining unit 26 may also determine the image paging order for formation (printing) of images based on the page index information of page data stored in the data storage unit 24. Furthermore, the image paging order can be determined merely based on the received order of the page data and/or the page index information, or based on the received order of the page data and/or the page index information as well as the print control information and/or the print engine capacity information stored in the program storage unit.

Then, the image sending unit 27, under the control of CPU 22, reads the page data from the data storage unit 24 according to above-described determined image paging order (which is consistent with the addressing order) to sends to the print engine unit 29. Finally, the print engine unit 29 prints the page data from the image sending unit 27 onto the paper sheet under the control of the engine control unit 28 to form an image. In this way, the image-forming process is completed.

Further, the above-described judgement of whether a duplex printing instruction is received or not is optional, because processing on one single page printing in the same manner as duplex printing can also result in the printout performed according to the image paging order expected by the user.

The above-described print engine capacity information can also be stored in the data storage unit 24 or the page order determining unit 26. The page order determining unit 26 may exist alone as described in the above-described embodiment or be integrated into CPU 22 of the printer, or it is possible that the page order determining unit 26 and the data storage unit 24 can be integrated into one page data processing device which may be in a plug-in form. In other words, the page order determining unit 26 and the data storage unit 24 can be realized in the form of a plug-in page data processing device outside of the printer 20.

In addition, the page data information can be transmitted by the host 10 to the printer 20 or the plug-in page data processing device, and it can also be received by a unit serving as an image acquisition unit of the printer 20 (not shown in the figure), such as a scanning unit, a facsimile unit, a camera unit and the like, and then the page data information is sent to the print engine unit 29 of the printer 20 by this image acquisition unit. In other words, the printer 20 further includes an image acquisition unit by which the image information is acquired as the page data. The print control information can be input by the user via the user interface on the host. The print control information can also be set by the user via the control panel on the printer, and then the page order determining unit 26 needs to read the print control information from the control panel, with reference of which it reorganizes the page order.

### Embodiment 2

Further description of the determination flow of the image paging order is provided in conjunction with the structure of the image forming system in embodiment 1. In the present embodiment, the page order determining unit 26 is configured to determine the image paging order and the addressing order of accessing to the data storage unit 24 based on the page data received order, the print control information as well as the print engine capacity information stored in the program storage unit 23.

For example, when a 10-page document is to be printed, the page data of pages 1-10 are transmitted from the host 10 to the printer 20 in the sequential order and stored in the data storage unit 24 of the printer 20 according to the page data received order. For example, the starting address word of the page data in every pages can be represented as, respectively, 00H, 10H, 20H, 30H, 40H, 50H, 60H, 70H, 80H and 90H. If the user enters information of one-sheet paper feed pattern and expects it to be duplex printed and discharged with facing upward, i.e., the discharged paper sheets, from the top to the bottom in the discharge tray, are arranged from small to large in term of page index and the data of the larger page index should be printed with priority, then the image paging order determined by the page order determining unit 26 will be 9-10-7-8-5-6-3-4-1-2. At this moment, the addressing order of accessing to the data storage unit 24 controlled by CPU 22 will be 80H-90H-60H-70H-40H-50H-20H-30H-00H-10H, so that the print engine unit 29 performs the printout in the order as desired by the user. If it is expected to be duplex printed and discharged with facing downward, i.e., the discharged paper sheets, from the bottom to the top in the discharge tray, are arranged from small to large in term of page index and the data of the smaller page index should be printed with priority, the image paging order determined by the page order determining unit 26 will be 2-1-4-3-6-5-8-7-10-9. At this moment, the addressing order of accessing to the data storage unit 24 controlled by CPU 22 will be 10H-00H-30H-20H-50H-40H-70H-60H-90H-80H.

Similarly, when the user selects n-sheet paper feed pattern, 2n pages is seemed as a unit for printing. In the case of the upward discharge mode is selected, the page data of larger page index of every 2n pages are printed with priority, and the page data of an odd page is printed prior to that of an even page. In the case that a m-page document is to be printed, m being an even number and n being 2, the print order of the first two fed sheets is (m-1) - (m-3) - (m) - (m-2). When it is selected that the paper sheets are to be discharged with facing downward, the page data of smaller page number are printed with more priority, and the page data of an even page are printed prior to that of an odd page. In the above-described example of a 10-page document to be printed, the print order of the first two fed paper sheets will be 2-4-1-3. In addition, in the case of multi-sheets paper feed pattern, a continuous paper feed mode can be selected, that is, one paper sheet is fed in while one paper sheet is discharged, so that the number of paper sheets in the print engine will always remain the same, making print faster.

In the present embodiment, preferably, the page data may be, as the patterns described in embodiment 2, fully and sequentially stored in the storage unit 24 of the printer and then transmitted by the image sending unit 27 to the print engine unit 29 for the print operations. Also, part of the page data for the image-forming process may also be initially received by the printer 20 via the communication interface unit 26 or the image acquisition unit, such that the part of the page data is initially stored in the data storage unit 24 of the printer and the image paging order thereof is initially determined by the page order determining unit 26. Then, after the image-forming processing on one unit or pre-set units of data is completed, the page data with size corresponding to the available storage capacity is stored and the image paging order thereof is determined, wherein said one unit of data refers to the data printed out by the printer 20 while once paper feed operation. For example, in the case that a 20-page document is to be duplex printed in 2 sheets paper feed pattern and discharged with facing downward, as the page data of each page is 2 M in size and the data storage unit 24 of the printer has a capacity of only 20 M for the storage of the page data information, only 10 pages of page data can be stored at the same time. Assuming the address word of every pages are 0000H, 0001H, 0002H, 0003H, 0004H, 0005H, 0006H, 0007H, 0008H and 0009H respectively, each of which is mapped to a storage area of 2 M in the data storage unit 24 respectively. When the host attempts to send the page data of pages 11 to 20, the printer will return a busy signal to the host. The page order determining unit 26 determines the order in terms of a unit of pages, i.e., when the document is printed in 2 sheets paper feed pattern and discharged with facing downward, it is sequenced in a unit of every 4 pages. Accordingly, in the above-described embodiment, the page data information of pages 1∼4 is firstly printed in the page order of 2-4-1-3, i.e., the stating address word of 0001H, 0003H, 0000H and 0002H are output as a unit data. When the paper sheets are successfully discharged, the above-mentioned storage unit is emptied, and the printer returns a signal to the host at this moment to inform that the storage unit has been released. Then, the data of pages 11∼14 is send to the printer from the host to be stored in the above released storage unit. In this way, the storage is re-utilized until all the data of the 20-page document is transmitted.

In this way, it is possible to realize buffering and printing of the data information of more pages with a smaller storage space, saving the storage space and reducing the cost of printer.

### Embodiment 3

During the printing process, paper jam occurs sometimes, and the jammed paper cannot be used for printing or is out of satisfactory printing quality, and thus it needs to be re-printed. In the prior art, when the paper jam occurs, the host 10 re-sends the page data information to the printer, and the printer 20 starts print operations from the beginning, causing both paper wastage and increased waiting time. In the present invention, by printing the page data information only involving the jammed sheet rather than the document information which has been printed previously, the troubleshooting control method of the present invention well solves this problem.

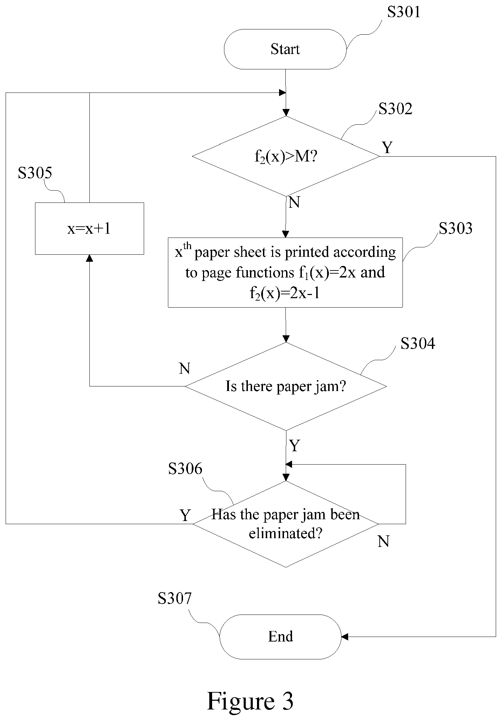

Figure 3 shows a flowchart of troubleshooting in case of malfunction during one-sheet paper feed pattern. Assuming an M-page (M is an even number) document is to be duplex printed and discharged with facing downward, then M/2 sheets of paper will be printed. Firstly, it is judged, according to page functions f₁(x)=2x and f₂(x)=2x-1 (x is a natural number), whether f₂(x) is larger than M. If so, then it is judged that the document to be printed has been fully printed, directly proceeding to a step S307 to end the printing process; or else, proceeding to S303 to print the x^{th} sheet of paper, i.e., the data of pages 2x and 2x-1 are printed. In the implementation of above-described print operations, the CPU of the printer will detect whether paper jam information has been received from the print engine unit 29. In case of paper jam, the loop enters S306 to check whether the paper jam has been eliminated. If not, the loop is suspended until the paper jam is eliminated and then returns to S302 to continue with the process for re-printing the page information of above-mentioned jammed paper. When the CPU confirms there's no paper jam, the loop enters S305, and x is added by 1 automatically. Then, the loop returns to S302 to continue with the print operations for the next sheet.

In the case of multi-sheets paper feed pattern (i.e., a pattern of 2 or more sheets of paper being fed at a time), when abnormal image-formation interruptions including paper jam, paper-out and the like occur, the multiple sheets fed at the time of interruption or only the jammed sheet can be reprinted, similar to that of the embodiment of one-sheet paper feed pattern. The specific processing flow is described as below.

In other words, when an abnormal image-forming interruption occurs in the image forming apparatus, the page data of two pages corresponding to a sheet that is receiving the image-forming processing when the image-forming interruption occurs are re-sent to the image-forming unit of the image forming apparatus, and then the page data of other follow-up pages are sent to the image-forming unit according to the image paging order determined before the abnormal image-forming interruption. In this way, the image-forming processing can be directly implemented without re-determining the image paging order, saving the system resources of the image forming apparatus.

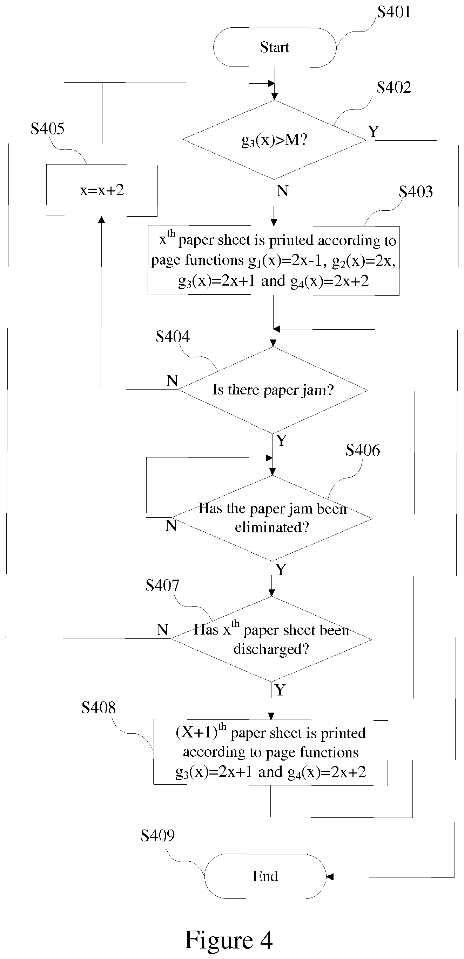

Figure 4 shows a flowchart of troubleshooting in case of malfunction during two-sheet paper feed pattern in one embodiment of the present invention. Assuming an M-page (M is a multiple of 4) document is to be duplex printed in the two-sheet paper feed pattern and discharged with facing downward, then M/2 sheets of paper will be printed. Firstly, it is judged, according to page functions g₁(x)=2x-1, g₂(x)=2x, g₃(x)=2x+1 and g₄(x)=2x+2 (x is a natural number), whether g₃(x) is larger than M. If so, it is judged that the document to be printed has been fully printed, directly proceeding to a step S409 to end the printing process; or else, proceeding to S403 to print the x^{th} and (x+1)^{th} sheets of paper, i.e., the data of pages 2x-1, 2x, 2x+1 and 2x+2 are printed. In the implementation of the above-described print operations, the CPU of the printer will detect whether paper jam information has been received from the print engine unit 29. When the CPU confirms there's no paper jam, the loop enters S405, and x is added by 2 automatically. Then, the loop returns to S402 to continue with the process for printing of the next 2 sheets. In case of the paper jam, the loop enters S406 to check whether the jammed paper has been removed. If not, then the loop will be suspended until the paper jam is eliminated. When the paper jam is eliminated, the loop proceeds to S407, and it is judged whether the x^{th} sheet of paper in this embodiment has been discharged. If the x^{th} paper sheet has not been discharged, then it is determined that the x^{th} paper sheet is jammed, and the loop returns to S402 to continue with the process for re-printing the data information of the 4 pages corresponding to the paper jam; if the x^{th} paper sheet has been discharged, then it is determined that (x+1)^{th} sheet of paper is jammed, and the loop returns to S408 to continue with the process for re-printing the data information of the 2 pages on the sheet that is jammed, for which it is according to the one-sheet feed pattern. More specifically, the image sending unit re-sends to the print engine unit 29 the two pages of data corresponding to a sheet that is receiving the image-forming processing when the abnormal image-forming interruption occurs, and then the print engine unit 29 implements the image-forming process for printout in a manner of one sheet per time, and then image sending unit 27 sends the data of other sequential pages to the print engine unit 29 for the follow-up image-forming processing according to the image paging order determined by the page order determining unit 26. Then, the loop returns to S404 to determine whether there is paper jam: if there's no paper jam, the loop returns to S402 though S405 to start printing the follow-up 2 pages; if the paper jam is detected again, then the loop continues the above-described process for re-printing the data information of the 2 pages on the jammed paper sheet, and so forth until it can be normally printed and discharged.

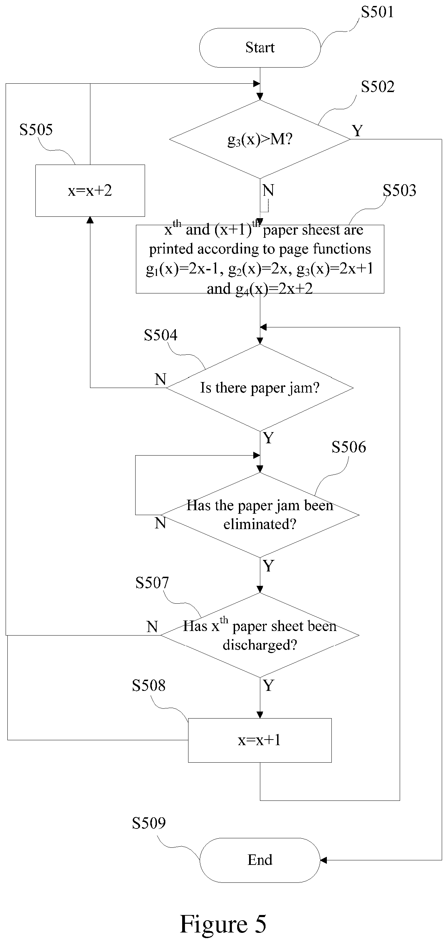

Figure 5 shows a flowchart of troubleshooting in case of malfunction during two-sheet paper feed pattern in another embodiment of the present invention. Since most of the steps thereof are the same as that shown in Figure 4, it will not be further described in detail herein. The difference of this from the trouble-shooting method shown in Figure 4 is in S508, i.e., the processing after the x^{th} paper sheet has been discharged. In the present embodiment, after it is detected the x^{th} sheet has been discharged, x is added by 1 automatically, and then the loop returns to S502 to continue with above-described process, i.e., the page order determining unit 26 re-determines the image paging order of the page data of the 2 pages on the jammed sheet together with its follow-up page data, so as to re-print the page data which have not been successfully printed.

In all of the examples above, if the number of pages, i.e., M, of the document to be printed is an odd number, then a blank page can be added to turn it to be an even number before ordering, or the last page can be printed according to the single-side print mode and merely M-1 pages are ordered.

In the case of the n-sheet paper feed pattern, if the number of pages, i.e., M, of the document to be printed is not a multiple of 2n, the page order determining unit 26 can firstly determine the image paging order of the page data of pages of 2n's multiple according to the print control information for the n-sheet paper feed pattern, and then the page order determining unit 26 determines a paper feed pattern for a remainder of M/2n pages based on the print control information for the one-sheet paper feed pattern or the single-sided print mode, or determines a paper feed pattern specifically for the pages of remainder. Further, the paper feed pattern in term of a unit of 2n pages is not restricted to the way exemplified in embodiment 3; instead, the continuous paper feed pattern as described in embodiment 2 can also be adopted.

That is to say, in the case that an abnormal image-forming interruption occurs in said image forming apparatus, the image paging order of the page data of the two pages corresponding to the sheet that is receiving the image-forming processing when the image-forming interruption occurs is determined together with the image paging order of the follow-up page data, and said image sending unit sends the corresponding page data to said image-forming unit according to the re-determined image paging order. Since it is not necessary to process the page data of the jammed paper sheet separately, and instead the page data of the jammed paper sheet is ordered together with the page data of the follow-up pages before the image-forming processing, the image forming speed can be improved.

The troubleshooting method of the present invention can be controlled by either the CPU of the printer, or by a separate troubleshooting device built in the printer independently of the CPU.

The troubleshooting control method of the present invention is not limited to the duplex printing operation, instead it is applicable in the single-side print operation.

## Claims

1. An image forming apparatus (20) for printing on individual sheets, comprising:
a communication interface unit (21) for communicating with external equipments;
a storage unit (23, 24) for storing page data information, wherein said page data information includes page data for image-forming processing, and wherein said page data information may include page index information;
a page order determining unit (26) for determining the order of the image-forming processing of said page data that is referred to as image paging order;
an image-forming unit (29) for performing the image-forming processing; and
an image sending unit (27) for sending said page data stored in said storage unit (23, 24) to said image-forming unit according to the image paging order determined by said page order determining unit,
wherein, said image-forming unit (29) is arranged to perform the image-forming processing based on the received page data; and
wherein the page order determining unit (26) is arranged to determine whether a duplex printing instruction is received by said image forming apparatus(20) before said page order determining unit (26) determines the image paging order for the image-forming processing of said page data, **characterized in that** the image forming apparatus is arranged such that:
if it is judged that no duplex printing instruction is received, said image paging order is determined based on the received order of said page data and the orientation of the sheets used as the image-forming media; and
if it is judged that a duplex printing instruction is received, said page order determining unit (26) determines said image paging order based on at least one of the received order of said page data and said page index information contained in said page data information;
and **in that**:
whenever an abnormal image-forming interruption that occurs during duplex printing is eliminated, said image sending unit (27), under the control of a CPU, re-sends to the image-forming unit (29) the page data of two pages corresponding to a sheet that is receiving the image-forming processing when the image-forming interruption occurs, so as to re-print page data corresponding to the sheet, and then sends the page data of follow-up pages to said image-forming unit (29) according to the image paging order determined by said page order determining unit (26); or
when an abnormal image-forming interruption occurs, said page order determining unit (26) re-determines the image paging order of the page data of the two pages corresponding to the sheet that is receiving the image-forming processing when the image-forming interruption occurs together with the image paging order of the follow-up page data, and said image sending unit (27) sends the corresponding page data to said image-forming unit (29) according to the image paging order re-determined by said page order determining unit (26).

2. An image forming apparatus (20) according to claim 1, **characterized in that**:
said image sending unit (27) or the page order determining unit (26), according to said image paging order and storage address of the page data in said storage unit (23, 24), is arranged to determine the addressing order for said image sending unit (27) accessing to said storage unit to send the page data to said image-forming unit (29).

3. An image forming apparatus (20) according to claim 1, **characterized in that** the image forming apparatus is arranged such that:
if it is judged that a duplex printing instruction is received, said page order determining unit (26) determines said image paging order based on: at least one of said received order and said page index information in combination with at least one of print control information and information related to the processing capacity of said image-forming unit (29) while said image-forming unit (29) performing a single image-forming output.

4. An image forming apparatus (20) according to any preceding claim, **characterized in that**:
said communication interface unit (21) is arranged to receive the page data information from external equipments communicating with the image forming apparatus (20) and is arranged to store it in said storage unit (23, 24); and/or
the image forming apparatus (20) further includes an image acquisition unit by which image information is acquired as the page data.

5. An image forming apparatus (20) according to any preceding claim, **characterized in that**:
said storage unit (23, 24) is arranged to initially store part of the page data for the image-forming processing, and said page order determining unit (26) is arranged to determine the image paging order of this part of page data, and then, after the image-forming processing on one unit of data or pre-set units of data is completed, the pages data with size corresponding to the available storage capacity is stored and the image paging order thereof is determined,
wherein, said one unit of data refers to the page data processed by said image forming apparatus (20) while said image forming apparatus (20) performing a single image-forming process.

6. An image forming apparatus (20) according to claim 5, **characterized in that** the image forming apparatus is arranged such that if it is judged that a duplex printing instruction is received, when an abnormal image-forming interruption occurs:
said image sending unit (27) re-sends to the image-forming unit (29) the page data of two pages corresponding to a sheet that is receiving the image-forming processing when the image-forming interruption occurs, and then sends the page data of follow-up pages to said image-forming unit (29) according to the image paging order determined by said page order determining unit (26); or,
said page order determining unit (26) re-determines the image paging order of the page data of the two pages corresponding to the sheet that is receiving the image-forming processing when the image-forming interruption occurs together with the image paging order of the follow-up page data, and said image sending unit (27) sends the corresponding page data to said image-forming unit (29) according to the image paging order re-determined by said page order determining unit (26).

7. An image forming system, **characterized in** comprising an image forming apparatus (20) according to any preceding claim and an electronic equipment communicating with said image forming apparatus (20),
said communication interface unit (21) is arranged to receive page data information from said electronic equipment and is arranged to store the received
page data information in said storage unit (23, 24) of said image forming apparatus (20), and said page data information includes page data for the image-forming processing.

8. A control method for an image forming apparatus (20) for printing on individual sheets, the method comprises:
receiving page data information;
storing said page data information in a storage unit (23, 24) of said image forming apparatus (20), wherein said page data information includes page data for image-forming processing, and wherein said page data information may include page index information;
determining the order of the image-forming processing of said page data which is referred to as image paging order;
an image sending unit (27) sending the page data stored in said storage unit (23, 24) to an image-forming unit (29) of said image forming apparatus (20) according to the determined image paging order; and
performing, by the image-forming unit (29) of said image forming apparatus (20), the image-forming processing based on said received page data;
judging, before determination of the image paging order for the image-forming processing of said page data, whether a duplex printing instruction is received by said image forming apparatus (20); **characterised in that**:
if it is judged that no duplex printing instruction is received, determining the image paging order based on the received image paging order of said page data and the orientation of the sheets used as the image-forming media;
if it is judged that a duplex printing instruction is received, determining the image paging order based on at least one of the received order of said page data and said page index information contained in said page data information;
and **in that**:
whenever an abnormal image-forming interruption that occurs during duplex printing is eliminated, the image sending unit (27), under the control of a CPU, re-sending to the image-forming unit (29) the page data of two pages corresponding to a sheet that is receiving the image-forming processing when the image-forming interruption occurs, so as to re-print page data corresponding to the sheet, and then sending the page data of follow-up pages to said image-forming unit (29) according to the image paging order determined; or
when an abnormal image-forming interruption occurs, re-determining the image paging order of the page data of the two pages corresponding to the sheet that is receiving the image-forming processing when the image-forming interruption occurs together with the image paging order of the follow-up page data, and sending the corresponding page data to said image-forming unit (29) according to the image paging order re-determined.

9. A control method according to claim 8, **characterized in that**:
determining, according to said image paging order and the storage address of page data in said storage unit (23, 24), addressing order for sending the page data to said image-forming unit (29).

10. A control method according to claim 8, **characterized in that**:
if it is judged that a duplex printing instruction is received, determining the image paging order based on: at least one of said received order and said page index information in combination with at least one of print control information and information related to the processing capacity of said image-forming unit (29) while said image-forming unit (29) performing a single image-forming output.

11. A control method according to any one of claims 8 to 10, **characterized in that**:
storing, initially, part of the page data for image-forming processing in said storage unit (23, 24), and determining the image paging order of this part of page data by said page order determining unit (26), and then, after the image-forming processing on one unit of data or pre-set units of data is completed, storing the pages data with size corresponding to the available storage capacity and determining the image paging order,
wherein, said one unit of data refers to the page data processed by said image forming apparatus (20) while said image forming apparatus (20) performing a single image-forming process.

## Patentansprüche

1. Bilderzeugungsvorrichtung (20) zum Drucken auf einzelne Blätter, umfassend:
eine Kommunikationsschnittstelleneinheit (21) zum Kommunizieren mit externen Geräten;
eine Speichereinheit (23, 24) zum Speichern von Seitendateninformationen, wobei die Seitendateninformationen Seitendaten zur Bilderzeugungsverarbeitung enthalten und wobei die Seitendateninformationen Seitenindexinformationen enthalten können;
eine Seitenreihenfolgebestimmungseinheit (26) zum Bestimmen der Reihenfolge der Bilderzeugungsverarbeitung der Seitendaten, die als Bildseitenreihenfolge bezeichnet wird;
eine Bilderzeugungseinheit (29) zum Durchführen der Bilderzeugungsverarbeitung; und
eine Bildsendeeinheit (27) zum Senden der in der Speichereinheit (23, 24) gespeicherten Seitendaten an die Bilderzeugungseinheit gemäß der durch die Seitenreihenfolgebestimmungseinheit bestimmten Bildseitenreihenfolge,
wobei die Bilderzeugungseinheit (29) dazu eingerichtet ist, die Bilderzeugungsverarbeitung basierend auf den empfangenen Seitendaten durchzuführen; und
wobei die Seitenreihenfolgebestimmungseinheit (26) dazu eingerichtet ist, zu bestimmen, ob eine Duplexdruckanweisung durch die Bilderzeugungsvorrichtung (20) empfangen wird, bevor die Seitenreihenfolgebestimmungseinheit (26) die Bildseitenreihenfolge für die Bilderzeugungsverarbeitung der Seitendaten bestimmt, **dadurch gekennzeichnet, dass** die Bilderzeugungsvorrichtung dazu eingerichtet ist, dass:
wenn festgestellt wird, dass keine Duplexdruckanweisung empfangen wird, die Bildseitenreihenfolge basierend auf der empfangenen Reihenfolge der Seitendaten und der Ausrichtung der als das bilderzeugende Medium verwendeten Blätter bestimmt wird; und
wenn festgestellt wird, dass eine Duplexdruckanweisung empfangen wird, die Seitenreihenfolgebestimmungseinheit (26) die Bildseitenreihenfolge basierend auf mindestens einem von der empfangenen Reihenfolge der Seitendaten und der in den Seitendateninformationen enthaltenen Seitenindexinformationen bestimmt;
und dass:
immer wenn eine während des Duplexdruckens auftretende anormale Bilderzeugungsunterbrechung beseitigt wird, die Bildsendeeinheit (27) unter der Steuerung einer CPU die Seitendaten von zwei Seiten entsprechend einem Blatt, das die Bilderzeugungsverarbeitung beim Auftreten der Bilderzeugungsunterbrechung empfängt, erneut an die Bilderzeugungseinheit (29) sendet, um die dem Blatt entsprechenden Seitendaten erneut zu drucken, und anschließend die Seitendaten von Folgeseiten gemäß der durch die Seitenreihenfolgebestimmungseinheit (26) bestimmten Bildseitenreihenfolge an die Bilderzeugungseinheit (29) sendet; oder
wenn eine anormale Bilderzeugungsunterbrechung auftritt, die Seitenreihenfolgebestimmungseinheit (26) die Bildseitenreihenfolge der Seitendaten der beiden Seiten entsprechend dem Blatt, das die Bilderzeugungsverarbeitung beim Auftreten der Bilderzeugungsunterbrechung empfängt, zusammen mit der Bildseitenreihenfolge der Folgeseitendaten neu bestimmt und die Bildsendeeinheit (27) die entsprechenden Seitendaten gemäß der durch die Seitenreihenfolgebestimmungseinheit (26) neu bestimmten Bildseitenreihenfolge an die Bilderzeugungseinheit (29) sendet.

2. Bilderzeugungsvorrichtung (20) gemäß Anspruch 1, **dadurch gekennzeichnet, dass**:
die Bildsendeeinheit (27) oder die Seitenreihenfolgebestimmungseinheit (26) dazu eingerichtet ist, gemäß der Bildseitenreihenfolge und der Speicheradresse der Seitendaten in der Speichereinheit (23, 24), die Adressierungsreihenfolge für die Bildsendeeinheit (27) durch Zugreifen auf die Speichereinheit zu bestimmen, um die Seitendaten an die Bilderzeugungseinheit (29) zu senden.

3. Bilderzeugungsvorrichtung (20) gemäß Anspruch 1, **dadurch gekennzeichnet, dass** die Bilderzeugungsvorrichtung dazu eingerichtet ist, dass:
wenn festgestellt wird, dass eine Duplexdruckanweisung empfangen wird, die Seitenreihenfolgebestimmungseinheit (26) die Bildseitenreihenfolge basierend auf einem von: mindestens einer der empfangenen Reihenfolge und der Seitenindexinformationen in Kombination mit mindestens einer der Drucksteuerinformationen und Informationen bezüglich der Verarbeitungskapazität der Bilderzeugungseinheit (29) bestimmt, während die Bilderzeugungseinheit (29) eine einzelne Bilderzeugungsausgabe durchführt.

4. Bilderzeugungsvorrichtung (20) gemäß einem vorhergehenden Anspruch, **dadurch gekennzeichnet, dass**:
die Kommunikationsschnittstelleneinheit (21) dazu eingerichtet ist, die Seitendateninformationen aus externen, mit der Bilderzeugungsvorrichtung (20) kommunizierenden Geräten zu empfangen, und dazu eingerichtet ist, diese in der Speichereinheit (23, 24) zu speichern; und/oder
die Bilderzeugungsvorrichtung (20) ferner eine Bilderfassungseinheit aufweist, durch die Bildinformationen als Seitendaten erfasst werden.

5. Bilderzeugungsvorrichtung (20) gemäß einem vorhergehenden Anspruch, **dadurch gekennzeichnet, dass**:
die Speichereinheit (23, 24) dazu eingerichtet ist, anfänglich einen Teil der Seitendaten für die Bilderzeugungsverarbeitung zu speichern, und die Seitenreihenfolgebestimmungseinheit (26) dazu eingerichtet ist, die Bildseitenreihenfolge dieses Teils der Seitendaten zu bestimmen, und anschließend, nach Abschluss der Bilderzeugungsverarbeitung auf einer Dateneinheit oder auf voreingestellten Dateneinheiten, die Seitendaten mit einer Größe entsprechend der verfügbaren Speicherkapazität gespeichert werden und deren Bildseitenreihenfolge bestimmt wird,
wobei sich die eine Dateneinheit auf die Seitendaten bezieht, die durch die Bilderzeugungsvorrichtung (20) verarbeitet werden, während die Bilderzeugungsvorrichtung (20) einen einzelnen Bilderzeugungsvorgang durchführt.

6. Bilderzeugungsvorrichtung (20) gemäß Anspruch 5, **dadurch gekennzeichnet, dass** die Bilderzeugungsvorrichtung dazu eingerichtet ist, dass, wenn festgestellt wird, dass beim Auftreten einer anormalen Bilderzeugungsunterbrechung eine Duplexdruckanweisung empfangen wird:
die Bildsendeeinheit (27) die Seitendaten von zwei Seiten entsprechend einem Blatt, das die Bilderzeugungsverarbeitung beim Auftreten der Bilderzeugungsunterbrechung empfängt, erneut an die Bilderzeugungseinheit (29) sendet und anschließend die Seitendaten von Folgeseiten gemäß der durch die Seitenreihenfolgebestimmungseinheit (26) bestimmten Bildseitenreihenfolge an die Bilderzeugungseinheit (29) sendet; oder
die Seitenreihenfolgebestimmungseinheit (26) die Bildseitenreihenfolge der Seitendaten der beiden Seiten entsprechend dem Blatt, das die Bilderzeugungsverarbeitung beim Auftreten der Bilderzeugungsunterbrechung zusammen mit der Bildseitenreihenfolge der Folgeseitendaten empfängt, neu bestimmt, und die Bildsendeeinheit (27) die entsprechenden Seitendaten gemäß der durch die Seitenreihenfolgebestimmungseinheit (26) neu bestimmten Bildseitenreihenfolge an die Bilderzeugungseinheit (29) sendet.

7. Bilderzeugungssystem, **dadurch gekennzeichnet, dass** es eine Bilderzeugungsvorrichtung (20) gemäß einem vorhergehenden Anspruch und ein mit der Bilderzeugungsvorrichtung (20) kommunizierendes elektronisches Gerät umfasst,
die Kommunikationsschnittstelleneinheit (21) dazu eingerichtet ist, Seitendateninformationen aus dem elektronischen Gerät zu empfangen, und dazu eingerichtet ist, die empfangenen Seitendateninformationen in der Speichereinheit (23, 24) der Bilderzeugungsvorrichtung (20) zu speichern, und die Seitendateninformationen Seitendaten für die Bilderzeugungsverarbeitung aufweisen.

8. Steuerungsverfahren für eine Bilderzeugungsvorrichtung (20) zum Drucken auf einzelne Blätter, wobei das Verfahren umfasst:
Empfangen von Seitendateninformationen;
Speichern der Seitendateninformationen in einer Speichereinheit (23, 24) der Bilderzeugungsvorrichtung (20), wobei die Seitendateninformationen Seitendaten für eine Bilderzeugungsverarbeitung enthalten und wobei die Seitendateninformationen Seitenindexinformationen aufweisen können;
Bestimmen der Reihenfolge der Bilderzeugungsverarbeitung der Seitendaten, die als Bildseitenreihenfolge bezeichnet wird;
Senden der in der Speichereinheit (23, 24) gespeicherten Seitendaten durch eine Bildsendeeinheit (27) an eine Bilderzeugungseinheit (29) der Bilderzeugungsvorrichtung (20) gemäß der bestimmten Bildseitenreihenfolge; und
Durchführen der Bilderzeugungsverarbeitung basierend auf den empfangenen Seitendaten durch die Bilderzeugungseinheit (29) der Bilderzeugungsvorrichtung (20) ;
vor der Bestimmung der Bildseitenreihenfolge für die Bilderzeugungsverarbeitung der Seitendaten Feststellen, ob eine Duplexdruckanweisung durch die Bilderzeugungsvorrichtung (20) empfangen wird; **gekennzeichnet durch**:
wenn festgestellt wird, dass keine Duplexdruckanweisung empfangen wird, Bestimmen der Bildseitenreihenfolge basierend auf der empfangenen Bildseitenreihenfolge der Seitendaten und der Ausrichtung der als das bilderzeugende Medium verwendeten Blätter;
wenn festgestellt wird, dass eine Duplexdruckanweisung empfangen wird, Bestimmen der Bildseitenreihenfolge basierend auf mindestens einem von der empfangenen Reihenfolge der Seitendaten und der in den Seitendateninformationen enthaltenen Seitenindexinformationen;
und **dadurch, dass**:
immer wenn eine während des Duplexdruckens auftretende anormale Bilderzeugungsunterbrechung beseitigt wird, die Bildsendeeinheit (27) unter der Steuerung einer CPU die Seitendaten von zwei Seiten entsprechend einem Blatt, das die Bilderzeugungsverarbeitung beim Auftreten der Bilderzeugungsunterbrechung empfängt, erneut an die Bilderzeugungseinheit (29) sendet, um die dem Blatt entsprechenden Seitendaten erneut zu drucken, und anschließend die Seitendaten von Folgeseiten gemäß der bestimmten Bildseitenreihenfolge an die Bilderzeugungseinheit (29) sendet; oder
wenn eine anormale Bilderzeugungsunterbrechung auftritt, erneutes Bestimmen der Bildseitenreihenfolge der Seitendaten der beiden Seiten entsprechend dem Blatt, das die Bilderzeugungsverarbeitung beim Auftreten der Bilderzeugungsunterbrechung zusammen mit der Bildseitenreihenfolge der Folgeseitendaten und Senden der entsprechenden Seitendaten an die Bilderzeugungseinheit (29) gemäß der neu bestimmten Bildseitenreihenfolge.

9. Steuerungsverfahren gemäß Anspruch 8, **gekennzeichnet durch**:
Bestimmen der Adressierungsreihenfolge zum Senden der Seitendaten an die Bilderzeugungseinheit (29) gemäß der Bildseitenreihenfolge und der Speicheradresse der Seitendaten in der Speichereinheit (23, 24).

10. Steuerungsverfahren gemäß Anspruch 8, **gekennzeichnet durch**:
wenn festgestellt wird, dass eine Duplexdruckanweisung empfangen wird, Bestimmen der Bildseitenreihenfolge basierend auf einem von: mindestens einer der empfangenen Reihenfolge und der Seitenindexinformationen in Kombination mit mindestens einer der Drucksteuerinformationen und Informationen bezüglich der Verarbeitungskapazität der Bilderzeugungseinheit (29), während die Bilderzeugungseinheit (29) eine einzelne Bilderzeugungsausgabe durchführt.

11. Steuerungsverfahren gemäß einem der Ansprüche 8 bis 10, **gekennzeichnet durch**:
Speichern anfänglich eines Teils der Seitendaten für die Bilderzeugungsverarbeitung in der Speichereinheit (23, 24) und Bestimmen der Bildseitenreihenfolge dieses Teils der Seitendaten durch die Seitenreihenfolgebestimmungseinheit (26) und anschließend, nach Abschluss der Bilderzeugungsverarbeitung auf einer Dateneinheit oder voreingestellten Dateneinheiten, Speichern der Seitendaten mit einer Größe entsprechend der verfügbaren Speicherkapazität und Bestimmen der Bildseitenreihenfolge,
wobei sich die eine Dateneinheit auf die Seitendaten bezieht, die durch die Bilderzeugungsvorrichtung (20) verarbeitet werden, während die Bilderzeugungsvorrichtung (20) einen einzelnen Bilderzeugungsvorgang durchführt.

## Revendications

1. Appareil de formation d'images (20) pour une impression sur des feuilles individuelles, comprenant :
une unité d'interface de communication (21) destinée à communiquer avec des équipements externes ;
une unité de stockage (23, 24) destinée à stocker des informations de données de pages, lesdites informations de données de pages comportant des données de pages pour le traitement de formation d'images, et lesdites informations de données de pages pouvant comporter des informations d'index de pages ;
une unité de détermination d'ordre de pages (26) destinée à déterminer l'ordre du traitement de formation d'images desdites données de pages qui est appelé ordre de pagination d'images ;
une unité de formation d'images (29) destinée à réaliser le traitement de formation d'images ; et
une unité d'envoi d'images (27) destinée à envoyer lesdites données de pages stockées dans ladite unité de stockage (23, 24) à ladite unité de formation d'images en fonction de l'ordre de pagination d'images déterminé par ladite unité de détermination d'ordre de pages,
dans lequel ladite unité de formation d'images (29) est agencée pour réaliser le traitement de formation d'images en fonction des données de pages reçues ; et
dans lequel l'unité de détermination d'ordre de pages (26) est agencée pour déterminer si une instruction d'impression en recto-verso est reçue par ledit appareil de formation d'images (20) avant que ladite unité de détermination d'ordre de pages (26) détermine l'ordre de pagination d'images pour le traitement de formation d'images desdites données de pages, **caractérisé en ce que** l'appareil de formation d'images est agencé de telle sorte que :
s'il est jugé qu'aucune instruction d'impression en recto-verso n'est reçue, ledit ordre de pagination d'images est déterminé en fonction de l'ordre reçu desdites données de pages et de l'orientation des feuilles utilisées comme support de formation d'images ; et
s'il est jugé qu'une instruction d'impression en recto-verso est reçue, ladite unité de détermination d'ordre de pages (26) détermine ledit ordre de pagination d'images en fonction de l'ordre reçu desdites données de pages et/ou desdites informations d'index de pages contenues dans lesdites informations de données de pages ;
et **en ce que** :
chaque fois qu'une interruption de formation d'images anormale qui se produit pendant une impression en recto-verso est supprimée, ladite unité d'envoi d'images (27), sous le contrôle d'une UC, renvoie à l'unité de formation d'images (29) les données de pages de deux pages correspondant à une feuille qui reçoit le traitement de formation d'images quand l'interruption de formation d'images se produit, de manière à réimprimer des données de pages correspondant à la feuille, et envoie ensuite les données de pages de pages suivantes à ladite unité de formation d'images (29) en fonction de l'ordre de pagination d'images déterminé par ladite unité de détermination d'ordre de pages (26) ; ou
quand une interruption de formation d'images anormale se produit, ladite unité de détermination d'ordre de pages (26) détermine à nouveau l'ordre de pagination d'images des données de pages des deux pages correspondant à la feuille qui reçoit le traitement de formation d'images quand l'interruption de formation d'images se produit conjointement avec l'ordre de pagination d'images des données de pages suivantes, et ladite unité d'envoi d'images (27) envoie les données de pages correspondantes à ladite unité de formation d'images (29) en fonction de l'ordre de pagination d'images déterminé à nouveau par ladite unité de détermination d'ordre de pages (26).

2. Appareil de formation d'images (20) selon la revendication 1, **caractérisé en ce que** :
ladite unité d'envoi d'images (27) ou l'unité de détermination d'ordre de pages (26), en fonction dudit ordre de pagination d'images et d'une adresse de stockage des données de pages dans ladite unité de stockage (23, 24), est agencée pour déterminer l'ordre d'adressage pour ladite unité d'envoi d'images (27) accédant à ladite unité de stockage pour envoyer les données de pages à ladite unité de formation d'images (29).

3. Appareil de formation d'images (20) selon la revendication 1, **caractérisé en ce que** l'appareil de formation d'images est agencé de telle sorte que :
s'il est jugé qu'une instruction d'impression en recto-verso est reçue, ladite unité de détermination d'ordre de pages (26) détermine ledit ordre de pagination d'images en fonction dudit ordre reçu et/ou desdites informations d'index de pages en combinaison avec des informations de contrôle d'impression et/ou des informations relatives à la capacité de traitement de ladite unité de formation d'images (29) pendant que ladite unité de formation d'images (29) réalise une seule sortie de formation d'images.

4. Appareil de formation d'images (20) selon une quelconque revendication précédente, **caractérisé en ce que** :
ladite unité d'interface de communication (21) est agencée pour recevoir les informations de données de pages depuis des équipements externes communiquant avec l'appareil de formation d'images (20) et est agencée pour les stocker dans ladite unité de stockage (23, 24) ; et/ou
l'appareil de formation d'images (20) comporte en outre une unité d'acquisition d'images par laquelle des informations d'images sont acquises en tant que données de pages.

5. Appareil de formation d'images (20) selon une quelconque revendication précédente, **caractérisé en ce que** :
ladite unité de stockage (23, 24) est agencée pour stocker au départ une partie des données de pages pour le traitement de formation d'images, et ladite unité de détermination d'ordre de pages (26) est agencée pour déterminer l'ordre de pagination d'images de cette partie de données de pages, et ensuite, une fois que le traitement de formation d'images sur une unité de données ou des unités prédéfinies de données est achevé, les données de pages avec une taille correspondant à la capacité de stockage disponible sont stockées et l'ordre de pagination d'images de celles-ci est déterminé,
dans lequel ladite une unité de données fait référence aux données de pages traitées par ledit appareil de formation d'images (20) pendant que ledit appareil de formation d'images (20) réalise un seul processus de formation d'images.

6. Appareil de formation d'images (20) selon la revendication 5, **caractérisé en ce que** l'appareil de formation d'images est agencé de telle sorte que, s'il est jugé qu'une instruction d'impression en recto-verso est reçue, quand une interruption de formation d'images anormale se produit :
ladite unité d'envoi d'images (27) renvoie à l'unité de formation d'images (29) les données de pages de deux pages correspondant à une feuille qui reçoit le traitement de formation d'images quand l'interruption de formation d'images se produit, et envoie ensuite les données de pages de pages suivantes à ladite unité de formation d'images (29) en fonction de l'ordre de pagination d'images déterminé par ladite unité de détermination d'ordre de pages (26) ; ou
ladite unité de détermination d'ordre de pages (26) détermine à nouveau l'ordre de pagination d'images des données de pages des deux pages correspondant à la feuille qui reçoit le traitement de formation d'images quand l'interruption de formation d'images se produit conjointement avec l'ordre de pagination d'images des données de pages suivantes, et ladite unité d'envoi d'images (27) envoie les données de pages correspondantes à ladite unité de formation d'images (29) en fonction de l'ordre de pagination d'images déterminé à nouveau par ladite unité de détermination d'ordre de pages (26).

7. Système de formation d'images, **caractérisé en ce qu'**il comprend un appareil de formation d'images (20) selon une quelconque revendication précédente et un équipement électronique communiquant avec ledit appareil de formation d'images (20),
ladite unité d'interface de communication (21) est agencée pour recevoir des informations de données de pages depuis ledit équipement électronique et est agencée pour stocker les informations de données de pages reçues dans ladite unité de stockage (23, 24) dudit appareil de formation d'images (20), et lesdites informations de données de pages comportent des données de pages pour le traitement de formation d'images.

8. Procédé de contrôle pour un appareil de formation d'images (20) pour une impression sur des feuilles individuelles, le procédé comprenant :
la réception d'informations de données de pages ;
le stockage desdites informations de données de pages dans une unité de stockage (23, 24) dudit appareil de formation d'images (20), lesdites informations de données de pages comportant des données de pages pour un traitement de formation d'images, et lesdites informations de données de pages pouvant comporter des informations d'index de pages ;
la détermination de l'ordre du traitement de formation d'images desdites données de pages qui est appelé ordre de pagination d'images ;
l'envoi, par une unité d'envoi d'images (27), des données de pages stockées dans ladite unité de stockage (23, 24) à une unité de formation d'images (29) dudit appareil de formation d'images (20) en fonction de l'ordre de pagination d'images déterminé ; et
la réalisation, par l'unité de formation d'images (29) dudit appareil de formation d'images (20), du traitement de formation d'images en fonction des données de pages reçues ;
le jugement, avant la détermination de l'ordre de pagination d'images pour le traitement de formation d'images desdites données de pages, qu'une instruction d'impression en recto-verso est reçue ou non par ledit appareil de formation d'images (20) ; **caractérisé par** :
s'il est jugé qu'aucune instruction d'impression en recto-verso n'est reçue, la détermination de l'ordre de pagination d'images en fonction de l'ordre de pagination d'images reçu desdites données de pages et de l'orientation des feuilles utilisées comme support de formation d'images ;
s'il est jugé qu'une instruction d'impression en recto-verso est reçue, la détermination de l'ordre de pagination d'images en fonction de l'ordre reçu desdites données de pages et/ou desdites informations d'index de pages contenues dans lesdites informations de données de pages ;
et par :
chaque fois qu'une interruption de formation d'images anormale qui se produit pendant une impression en recto-verso est supprimée, le renvoi, par l'unité d'envoi d'images (27) sous le contrôle d'une UC à l'unité de formation d'images (29), des données de pages de deux pages correspondant à une feuille qui reçoit le traitement de formation d'images quand l'interruption de formation d'images se produit, de manière à réimprimer des données de pages correspondant à la feuille, et ensuite l'envoi des données de pages de pages suivantes à ladite unité de formation d'images (29) en fonction de l'ordre de pagination d'images déterminé ; ou
quand une interruption de formation d'images anormale se produit, une nouvelle détermination de l'ordre de pagination d'images des données de pages des deux pages correspondant à la feuille qui reçoit le traitement de formation d'images quand l'interruption de formation d'images se produit conjointement avec l'ordre de pagination d'images des données de pages suivantes, et l'envoi des données de pages correspondantes à ladite unité de formation d'images (29) en fonction de l'ordre de pagination d'images déterminé à nouveau.

9. Procédé de contrôle selon la revendication 8, **caractérisé par** :
la détermination, en fonction dudit ordre de pagination d'images et de l'adresse de stockage de données de pages dans ladite unité de stockage (23, 24), de l'ordre d'adressage pour l'envoi des données de pages à ladite unité de formation d'images (29).

10. Procédé de contrôle selon la revendication 8, **caractérisé par** :
s'il est jugé qu'une instruction d'impression en recto-verso est reçue, la détermination de l'ordre de pagination d'images en fonction dudit ordre reçu et/ou desdites informations d'index de pages en combinaison avec des informations de contrôle d'impression et/ou des informations relatives à la capacité de traitement de ladite unité de formation d'images (29) pendant que ladite unité de formation d'images (29) réalise une seule sortie de formation d'images.

11. Procédé de contrôle selon l'une quelconque des revendications 8 à 10, **caractérisé par** :
le stockage, au départ, d'une partie des données de pages pour le traitement de formation d'images dans ladite unité de stockage (23, 24), et la détermination de l'ordre de pagination d'images de cette partie de données de pages par ladite unité de détermination d'ordre de pages (26), et ensuite, une fois que le traitement de formation d'images sur une unité de données ou des unités prédéfinies de données est achevé, le stockage des données de pages avec une taille correspondant à la capacité de stockage disponible et la détermination de l'ordre de pagination d'images,
dans lequel ladite une unité de données fait référence aux données de pages traitées par ledit appareil de formation d'images (20) pendant que ledit appareil de formation d'images (20) réalise un seul processus de formation d'images.
